# FASCICULE DE BREVET EUROPEEN

(11) **EP 3 119 241 B1**
(45) Date de publication et mention de la délivrance du brevet: **28.11.2018**
(21) Numéro de dépôt: 14719808.9
(22) Date de dépôt: 20.03.2014
(51) Int. Cl.: A47B 95/00, F16B 12/20, H02G 3/12

(54) **CADRE MUNI D'AU MOINS UN DISPOSITIF POUR SA POUR LA FIXATION DANS UN ORIFICE TRAVERSANT D'UN PANNEAU**
RAHMEN MIT MINDESTENS EINER VORRICHTUNG ZUR BEFESTIGUNG IN EINER DURCHGANGSÖFFNUNG IN EINER PLATTE
FRAME PROVIDED WITH AT LEAST ONE DEVICE FOR FIXING IT IN A THROUGH-ORIFICE IN A PANEL

(43) Date de publication de la demande: 25.01.2017
(73) Titulaire: STEELCASE INC, Grand Rapids, Michigan 49501-1967 (US)
(72) Inventeur: DUTERTRE, Daniel, 67150 Hindisheim (FR)
(74) Mandataire: Littolff, Denis
(86) Numéro de dépôt international: PCT/FR2014/050650
(87) Numéro de publication internationale: WO 2015/140418

(56) Documents cités:
- EP-A1- 2 685 577
- US-A- 5 575 668
- US-A1- 2004 075 373
- US-A1- 2006 169 471
- US-A1- 2009 301 774

## Description

La présente invention a pour objet un cadre muni d'au moins un dispositif pour sa fixation dans un orifice traversant s'étendant entre deux faces opposées d'un panneau tel que notamment un plan de travail, ledit cadre étant constitué d'une paroi périphérique présentant un bord supérieur et un bord inférieur, ladite paroi périphérique étant apte à revêtir la structure du panneau délimitant ledit orifice traversant, et son bord supérieur étant pourvu d'un rebord apte à reposer contre une première face du panneau autour dudit orifice traversant.

Il est courant d'équiper un panneau, de type plan de travail, d'un orifice permettant d'accéder depuis la face supérieure du plan de travail à l'espace situé sous sa face inférieure, de sorte à ménager un passage, par lequel il est par exemple possible de relier les câbles de raccordement d'appareils électriques disposés sur le plan de travail à des prises ou à des connecteurs situés sous le plan de travail.

Que ce soit à des fins fonctionnelles ou simplement dans un but esthétique, un tel orifice traversant est généralement revêtu d'un cadre formé d'une paroi périphérique équipée d'un rebord reposant sur la face supérieure du plan de travail, autour de l'orifice traversant, et masquant la structure du panneau autour de l'orifice traversant. De manière optionnelle, un tel cadre peut également faire office de support pour un moyen d'obturation au moins partielle de l'orifice traversant, tel que par exemple une trappe d'accès pivotante ou coulissante.

Le document US2009/0301774 A1 divulgue un module de sol avec des supports de connexion.

De manière classique, le cadre peut être simplement monté avec un ajustement serré dans ledit orifice traversant, sans recourir à un élément d'assemblage quelconque supplémentaire, son positionnement convenable étant atteint lorsque le rebord est en appui contre la face supérieure du plan de travail. Une telle solution est par exemple connue du document EP 2 251 949 A2. Elle est avantageuse du fait de sa simplicité structurelle et du fait qu'elle ne nécessite aucune dextérité particulière de la part d'un utilisateur, puisqu'il suffit d'emboîter le cadre dans ledit orifice traversant jusqu'à ce que le rebord soit en appui contre le plan de travail. Néanmoins, elle ne donne pas entière satisfaction, en particulier lorsqu'elle est mise en oeuvre dans le cas d'un cadre servant de support à un moyen d'obturation. En effet, dans ce cas, un tel cadre est généralement soumis à de fréquentes manipulations pouvant rapidement entraîner son déboîtement intempestif dudit orifice traversant, ce qui suppose une intervention pour le repositionner convenablement. D'autre part, du fait de possibles imperfections de fabrication, ou du fait de l'utilisation de matériaux présentant une certaine déformabilité, l'ajustement entre l'orifice traversant et le cadre n'est pas toujours irréprochable, ce qui peut donner lieu à un jeu, entre ledit cadre et ledit orifice traversant, préjudiciable aussi bien à la qualité de l'emboîtement qu'à l'aspect esthétique de l'ensemble.

L'objectif de la présente invention est par conséquent de proposer un cadre et un dispositif pour la fixation du dit cadre dans un orifice traversant s'étendant entre deux faces opposées d'un panneau tel que notamment un plan de travail qui garantisse à la fois une stabilité de l'assemblage entre le cadre et l'orifice traversant, évitant tout déboîtement intempestif, et un parfait positionnement du cadre dans l'orifice traversant, pour un aspect esthétique irréprochable.

A cet effet, l'invention concerne un cadre muni d'au moins un dispositif pour sa fixation dans un orifice traversant s'étendant entre deux faces opposées d'un panneau tel que notamment un plan de travail du genre indiqué en préambule, caractérisé en ce qu'il comporte au moins un organe de serrage comprenant au moins un bras solidaire d'une languette s'étendant dans un plan perpendiculaire audit bras, et un moyen d'assemblage pour fixer ladite languette sur la seconde face du panneau au voisinage de l'orifice traversant, ledit bras de l'organe de serrage étant agencé pour exercer d'une part, sur ladite paroi périphérique, une force destinée à plaquer ladite paroi périphérique contre la structure du panneau délimitant ledit orifice traversant et d'autre part, sur une butée que comporte ladite paroi périphérique, une force destinée à plaquer le rebord dudit cadre contre la première face du panneau, lorsque ladite languette est fixée sur la seconde face du panneau.

Conformément à une variante de réalisation de l'invention, la paroi périphérique du cadre est une double paroi comportant une paroi externe et une paroi interne, la paroi externe comportant au moins une découpe s'étendant depuis le bord inférieur vers le bord supérieur de la paroi périphérique, sur une longueur correspondant sensiblement à la largeur de la languette de l'organe de serrage et une hauteur correspondant sensiblement à l'épaisseur de la languette, ladite découpe et l'espace compris entre la paroi externe et la paroi interne, au voisinage de ladite découpe, définissant un logement pour ledit bras de l'organe de serrage.

Par ailleurs, le bras de l'organe de serrage comporte de préférence une portion sensiblement rectiligne prolongée par une portion en forme de crochet.

Dans ce cas, ladite butée peut avantageusement être définie par une nervure s'étendant le long d'une extrémité latérale de ladite découpe entre la paroi externe et la paroi interne de la paroi périphérique depuis le bord inférieur en direction du bord supérieur de cette dernière, la longueur de ladite nervure correspondant sensiblement à la longueur de la portion sensiblement rectiligne du bras de l'organe de serrage.

En outre, selon une caractéristique additionnelle, l'écart prévu entre lesdites parois interne et externe est avantageusement tel qu'il permet un ajustement serré du bras de l'organe de serrage engagé dans ledit logement.

La présente invention se caractérise encore en ce que la double paroi est renforcée par une série de nervures, de préférence sensiblement équidistantes, reliant entre elles la paroi externe et la paroi interne et s'étendant entre les bords supérieur et inférieur de la paroi périphérique.

Selon une variante de réalisation préférentielle de l'invention, ledit organe de serrage comporte deux bras, s'étendant dans un même plan perpendiculaire à ladite languette, et symétriques par rapport à un axe centré sur un bord de ladite languette dont ils sont solidaires.

Une autre caractéristique de l'invention est encore définie par le fait que la seconde face du panneau comporte au voisinage de l'orifice traversant un renfoncement de forme complémentaire à ladite languette et dans lequel ladite languette peut reposer lorsque ledit bras est engagé dans ledit logement et en appui sur ladite butée.

De préférence, le moyen d'assemblage permettant de fixer la languette contre la seconde face du panneau est choisi parmi la liste comprenant une vis, un clip à queue, un rivet, et dans ce cas, ladite languette comporte de préférence au moins un trou permettant le passage dudit moyen d'assemblage.

Par ailleurs, la languette peut avantageusement comporter des moyens de rigidification, tels que par exemple au moins une nervure parcourant sa face inférieure.

Un autre objet de l'invention concerne un procédé de mise en oeuvre d'un dispositif tel que décrit précédemment, pour la fixation d'un cadre dans un orifice traversant s'étendant entre deux faces opposées d'un panneau, tel que notamment un plan de travail dans lequel :
- on insère dans ledit orifice traversant un cadre constitué d'une paroi périphérique présentant un bord supérieur et un bord inférieur, ladite paroi périphérique étant apte à revêtir la structure du panneau délimitant ledit orifice traversant, et son bord supérieur étant pourvu d'un rebord apte à reposer contre une première face du panneau autour dudit orifice traversant, ladite paroi périphérique comportant en outre une butée,
- on dispose le rebord du cadre contre une première face du panneau autour dudit orifice traversant,
- on place un bras solidaire d'une languette d'un organe de serrage au contact de la paroi périphérique du cadre et de la butée qu'elle comporte,
- on fait pivoter ledit bras autour de ladite butée de manière à amener ladite languette de l'organe de serrage au contact de la seconde face du panneau,
- on fixe ladite languette sur ladite seconde face du panneau de manière telle que ledit bras exerce d'une part sur ladite butée une force permettant de plaquer le rebord dudit cadre contre la première face du panneau et d'autre part contre ladite paroi périphérique une force permettant de plaquer ladite paroi périphérique contre la structure du panneau délimitant ladite ouverture.

Conformément à une caractéristique du procédé selon l'invention, pour placer le bras de l'organe de serrage au contact de la paroi périphérique du cadre et de la butée qu'elle comporte, on l'engage dans un logement ménagé entre une paroi externe et une paroi interne de la paroi périphérique du cadre.

Conformément à une autre caractéristique du procédé selon l'invention, lorsqu'on amène la languette de l'organe de serrage au contact de la seconde face du panneau, on la positionne dans un renfoncement de forme complémentaire formé dans ladite seconde face dudit panneau.

Par ailleurs, pour fixer la languette de l'organe de serrage sur ladite seconde face du panneau, le procédé selon l'invention prévoit d'utiliser préférentiellement un moyen d'assemblage choisi parmi la liste comprenant une vis, un clip à queue, un rivet.

La présente invention et ses avantages apparaîtront mieux dans la description suivante d'une variante de réalisation donnée à titre d'exemple non limitatif, faite en référence aux dessins annexés dans lesquels :
- les figures 1A et 1B illustrent chacune une vue de dessus d'un plan de travail comportant un orifice traversant revêtu d'un cadre supportant une trappe en position respectivement ouverte et fermée,
- la figure 2 illustre une vue de dessous du plan de travail de la figure 1,
- les figures 3 à 7 représentent des vues du détail D de la figure 2, illustrant différentes étapes de la mise en oeuvre du dispositif selon l'invention, le cadre ayant été représenté en coupe partielle aux figures 5 et 6.

En référence aux figures, l'invention concerne un dispositif pour la fixation d'un cadre 1 dans un orifice traversant 2 formé à travers l'épaisseur e d'un plan de travail 3, tel que par exemple un plateau de bureau, et s'étendant ainsi entre une première face et une deuxième face opposées du plan de travail 3, en l'occurrence entre la face supérieure 3 et la face inférieure 4 de ce dernier.

Dans l'exemple de réalisation illustré, l'orifice traversant 2 présente une forme parallélépipédique, offrant un accès aisé à l'espace situé sous la face inférieure 5 du plan de travail 3 depuis la face supérieure 4. Le cadre 1 est constitué d'une paroi périphérique 10, fermée sur elle-même, fabriquée en un matériau choisi parmi la liste comprenant un plastique, un matériau composite, un métal, ou tout matériau équivalent.

La paroi périphérique 1 comporte deux parois longitudinales 11 parallèles entre elles, reliées par deux parois latérales 12 définissant entre elles un passage de forme et de dimension sensiblement identiques à celles de l'orifice traversant 2. Ainsi, lorsque le cadre 1 est emboîté dans l'orifice traversant 2, sa paroi périphérique 10 est apte à revêtir la découpe pratiquée dans le plan de travail 3 pour obtenir l'orifice traversant 2 et donc la structure 9 du plan de travail 3 délimitant ledit orifice traversant 2.

Par ailleurs, la paroi périphérique 10 comporte un bord supérieur 13 prolongé par un rebord 15 apte à reposer sur la face supérieure 4 du plan de travail 3, autour de l'orifice traversant 2.

La paroi périphérique 10 présente une hauteur h sensiblement identique à l'épaisseur e du plan de travail 3, de sorte que son bord inférieur 14 se situe sensiblement à ras avec la face inférieure 5 dudit plan de travail 3 lorsque le cadre 1 est emboîté dans l'orifice traversant 2. Bien entendu, la paroi périphérique pourrait présenter une hauteur h différente, notamment plus importante que l'épaisseur e du plan de travail sans que cela nuise à l'esprit de l'invention.

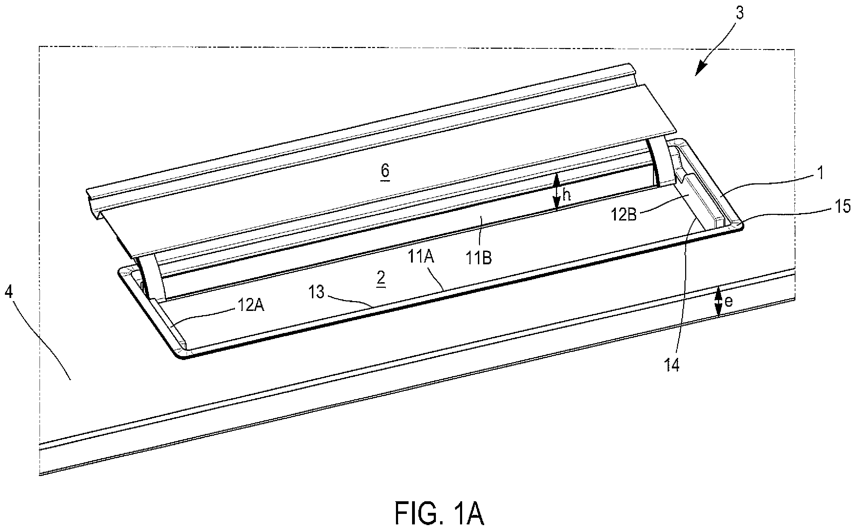

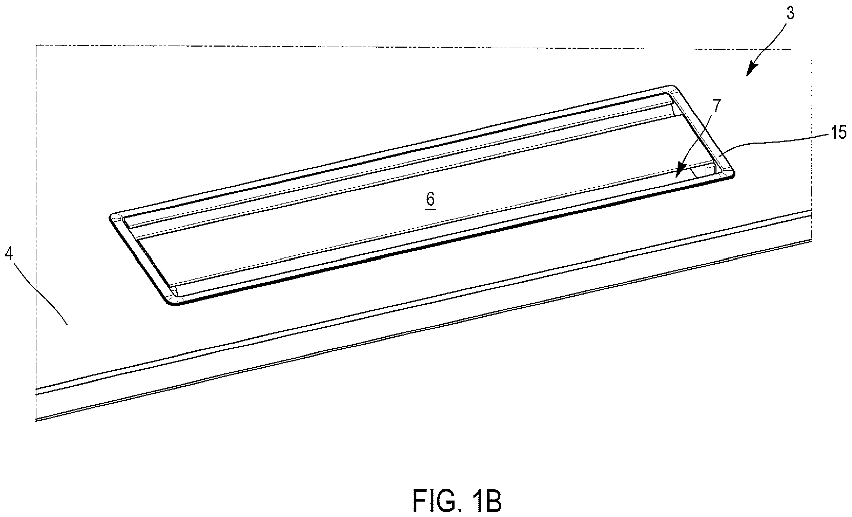

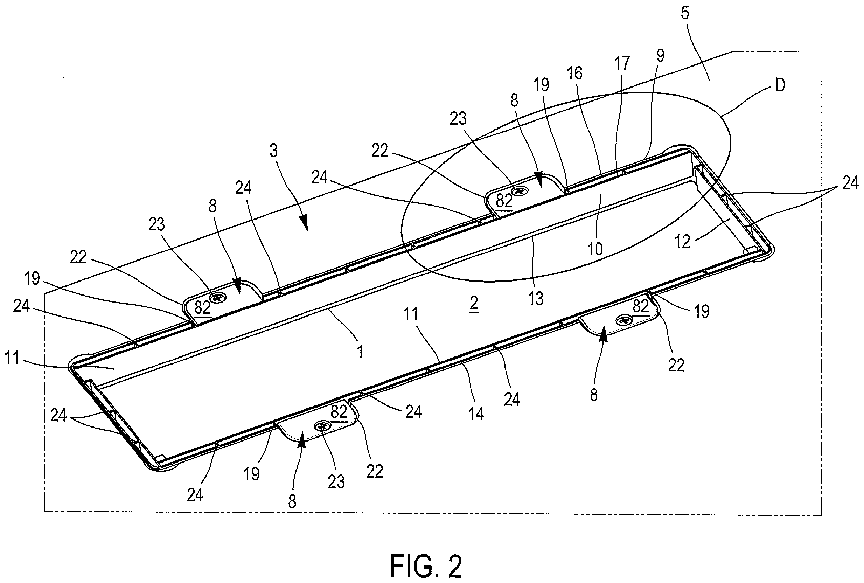

Tel qu'illustré aux figures 1 et 2, le cadre 1 sert par ailleurs de support à une trappe 6 montée pivotante sur les parois latérales 12 de la paroi périphérique 10, et pouvant adopter une position ouverte (fig. 1) offrant un accès à l'espace situé sous le plan de travail 3 ou une position fermée (fig. 2) dans laquelle elle est sensiblement située dans le plan de la face supérieure 4 du plan de travail 3. De manière classique, les dimensions de la trappe 6 sont de préférence telles que dans sa position fermée un interstice 7, permettant le passage d'éventuels câbles, est ménagé entre la paroi périphérique 10 du cadre 1 et la trappe 6.

Dans la variante de réalisation illustrée, le cadre 1 est avantageusement fixé sur le plan de travail 3 au moyen de quatre organes de serrage 8 identiques, fabriqués, à l'instar du cadre 1, en un matériau choisi parmi la liste comprenant un plastique, un matériau composite, un métal, ou tout matériau équivalent. Les organes de serrage 8 sont répartis deux à deux le long des parois longitudinales 11 du cadre 1, étant entendu que ce nombre d'organes de serrage 8 et leur répartition sont purement exemplaires et peuvent être adaptés au cas par cas, en fonction de la forme et des dimensions du cadre 1.

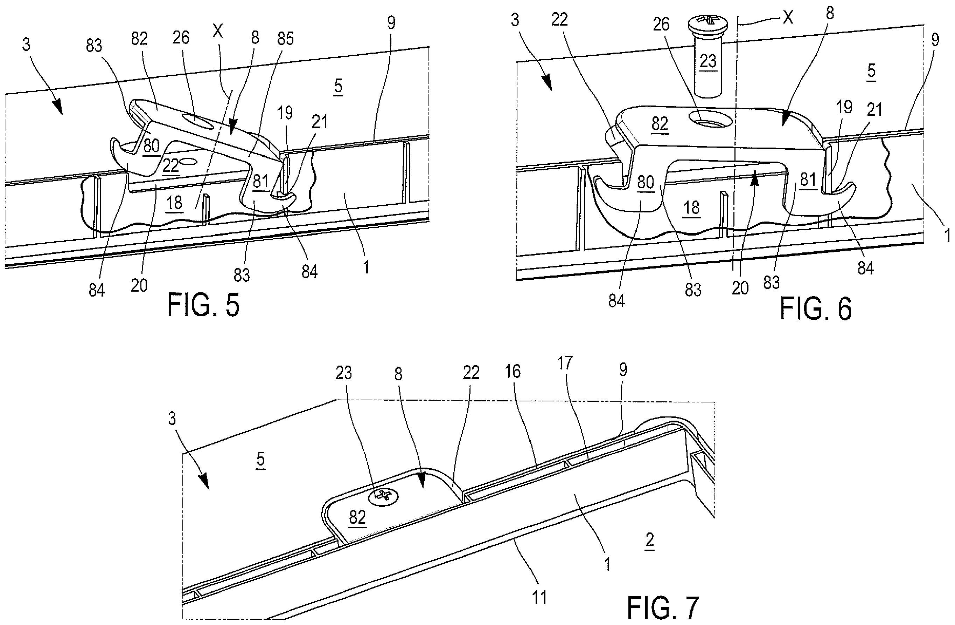

Chaque organe de serrage 8 comporte une portion apte à coopérer avec le cadre 1 et une autre portion agencée pour être fixée au plan de travail 3. Dans la variante de réalisation illustrée, chaque organe de serrage 8 comporte à cet effet deux bras 80, 81 prolongeant un bord 85 d'une languette 82, ici sensiblement en forme de demi-lune, et qui s'étend dans un plan perpendiculaire auxdits bras 80, 81 (figs. 5 et 6). Conformément à l'invention, les bras 80, 81 sont agencés pour coopérer avec ledit cadre 1, tandis que la languette 82 est destinée à être fixée contre le plan de travail 3, en l'occurrence contre la face inférieure 5 de ce dernier, par le biais d'un moyen d'assemblage approprié.

Dans la variante de réalisation illustrée, les deux bras 80, 81 d'un organe de serrage 8 sont symétriques par rapport à un axe X centré sur le bord 85 de la languette 82. En outre, ils présentent chacun une zone 83 sensiblement rectiligne, et une zone en forme de crochet 84. En fait, les bras 80, 81 sont destinés à être engagés dans un logement 18 du cadre 1 (figs. 5 et 6) comportant une butée sur laquelle le crochet 84 d'un bras 81 est apte à prendre appui de sorte à exercer sur le cadre 1 une force destinée à plaquer son rebord 15 contre la face supérieure 4 du plan de travail 3, lorsque la languette 82 est fixée sur la face inférieure 5 du plan de travail 3.

Dans la variante de réalisation illustrée, le cadre 1 comporte ainsi quatre logements 18, répartis deux à deux le long de chacune des parois longitudinales 11 de la paroi périphérique 10. Avantageusement, cette dernière peut être définie par une double paroi comportant une paroi externe 16 et une paroi interne 17 ménageant entre elles un espace permettant l'introduction des bras 80, 81.

Conformément à l'invention, chaque logement 18 est délimité par ledit espace, compris entre la paroi externe 16 et la paroi interne 17 de la paroi périphérique 10, et par une découpe 20, de forme sensiblement parallélépipédique réalisée sur la paroi externe 16, au voisinage du bord inférieur 14 de la paroi périphérique 10.

En fait, la découpe 20 présente une hauteur sensiblement identique à l'épaisseur de la languette 82 et une longueur sensiblement identique à la longueur du bord 83 de la languette 82. La découpe 20 est réalisée sur la paroi externe 16 à un emplacement situé, lorsque le cadre 1 est emboîté dans l'orifice traversant 2, en regard d'un renfoncement 22 que la face inférieure 5 du plan de travail 3 peut préférentiellement comporter, et dont la forme est complémentaire à celle de la languette 82.

Ainsi, lorsque les deux bras 80, 81 d'un organe de serrage sont engagés dans un logement 18, la languette 82 et son bord 85 sont aptes à reposer respectivement dans un renfoncement 22 et au-dessus de la découpe 20 délimitant ledit logement 18. Grâce à une telle configuration, la languette 82 de l'organe de serrage 8 considéré se trouve pour ainsi dire intégrée dans la face inférieure 5 du plan de travail 3, ce qui permet d'améliorer la qualité de l'assemblage entre le cadre 1 et le plan de travail 3, tout en évitant la présence d'éventuels éléments proéminents sur ladite face inférieure 5 du plan de travail 3.

De préférence, l'écartement entre les parois externe 16 et interne 17 de la paroi périphérique 10 du cadre 1 correspond sensiblement à l'épaisseur des bras 80, 81 d'un organe de serrage 8 de sorte que ceux-ci puissent y être engagés avec un ajustement serré et exercent sur la paroi externe 16 une force permettant de plaquer la paroi périphérique 10 contre la structure 9 du plan de travail 3 autour de l'orifice traversant 2, une fois la languette 82 fixée sur la face inférieure 5 du plan de travail 3.

Par ailleurs, dans la variante de réalisation illustrée, la butée que comporte un logement 18 est définie par une nervure 19 formée entre les parois externe 16 et interne 17 de la paroi périphérique 10 du cadre 1, au niveau d'une extrémité latérale de la découpe 20. En référence aux figures 5 et 6, la nervure 19 s'étend depuis ledit bord inférieur 14 de la paroi périphérique 10, perpendiculairement audit bord inférieur 14, sur une hauteur correspondant sensiblement à la longueur de la zone rectiligne d'un bras 80, 81 d'un organe de serrage 8. En fait, la nervure 19 est conçue de manière telle que la zone en forme de crochet 84 d'un des bras 80, 81, à savoir du bras 81 dans l'exemple illustré, est en appui sur l'extrémité libre 21 de la nervure 19 lorsque les deux bras 80, 81 sont engagés dans un logement 18 et que la languette 82 repose dans un renfoncement 22 de la face inférieure 5 du plan de travail 3.

En fait, pour fixer le cadre 1 dans l'orifice traversant 2 dans lequel il a été préalablement emboîté de manière telle que son rebord 15 repose sur la face supérieure 4 du plan de travail 3, on utilise successivement chacun des quatre organes de serrage 8 que l'on manipule chacun de manière similaire.

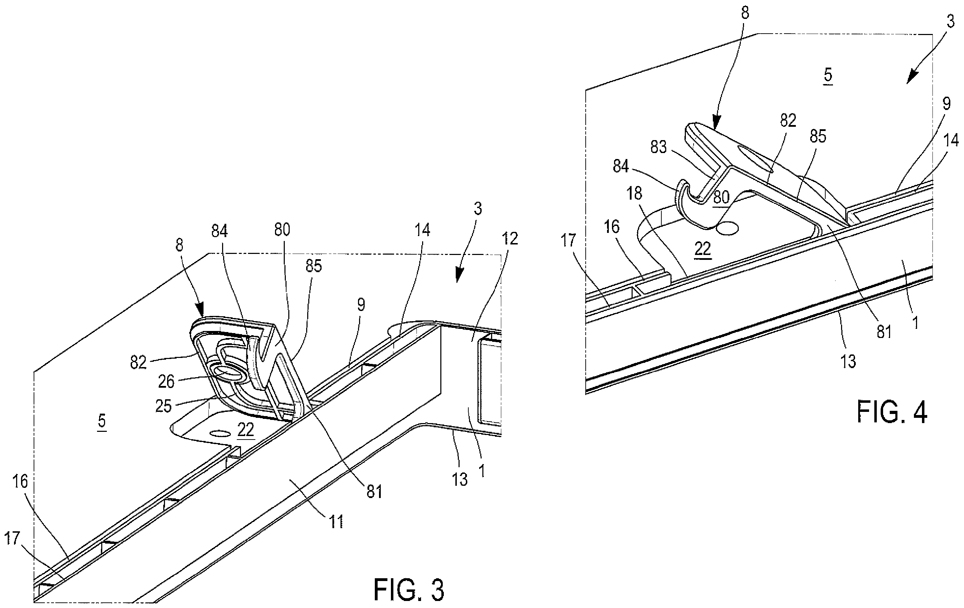

Les figures 3 à 7 illustrent les différentes étapes de la mise en oeuvre d'un organe de serrage 8 pour fixer le cadre 1 dans l'orifice traversant 2.

Ainsi, tel que représenté à la figure 3, la première étape consiste à introduire, en premier dans un logement 18, celui des deux bras 80, 81 d'un organe de serrage 8 dont la zone en forme de crochet 84 est supposée interagir avec la nervure 19. Dans l'exemple illustré, il s'agit du bras 81.

L'on fait ensuite pivoter la zone en forme de crochet 84 de ce dernier autour de l'extrémité libre 21 de la nervure 19 (figs. 4 à 6) jusqu'à ce que le second bras 80 soit entièrement engagé dans le logement 18 et que la languette 82 repose dans le renfoncement 22 de la face inférieure 5 du plan de travail 3.

Un moyen d'assemblage, tel que par exemple une vis 23, ou tout autre moyen équivalent tel que notamment un clip à queue, ou encore un rivet, est ensuite utilisé pour fixer la languette 82, comprenant à cet effet par exemple un trou 26, dans le renfoncement 22.

Le fait de serrer la languette 82 contre la face inférieure 5 du plan de travail 3 a pour effet de maintenir l'organe de serrage 8 dans une position active, dans laquelle les deux bras 80, 81 sont engagés dans le logement 18, et appuient tous les deux contre la face interne de la paroi externe 16 de la paroi périphérique 10 qui se trouve ainsi plaquée contre la structure 9 du plan de travail 3 délimitant l'orifice traversant 2. Naturellement, cette action sera d'autant plus soutenue que la largeur des bras 80, 81 et donc la surface de contact entre ces derniers et la paroi externe 16, sera importante.

Dans la position active de l'organe de serrage 8, la zone en forme de crochet 84 du bras 81 exerce en outre sur la nervure 19 une force permettant de plaquer le rebord 15 du cadre 1 contre la face supérieure 4 du plan de travail 3.

Ces deux actions concomitantes permettent avantageusement de pallier un éventuel jeu entre le cadre 1 et la structure 9 du plan de travail 3 autour de l'orifice traversant 2.

Ainsi, dans sa position active, un organe de serrage 8 permet à la fois de préserver l'assemblage du cadre 1 dans l'orifice traversant 2, de sorte à éviter tout déboîtement intempestif, et l'aspect esthétique de cet assemblage puisqu'il permet au cadre 1 d'épouser parfaitement la découpe pratiquée dans le plan de travail 3 et de présenter ainsi un fini impeccable.

Une série de nervures 24 régulièrement espacées reliant entre elles la paroi externe 16 et la paroi interne 17 et s'étendant de préférence sur l'ensemble de la hauteur de la paroi périphérique 10 entre ses bords supérieur 13 et inférieur 14, permettent en outre de rigidifier le cadre 1 et d'en améliorer encore la tenue mécanique et donc l'aspect esthétique.

Selon une autre caractéristique de l'invention, la languette 82 comporte également des moyens de rigidification, évitant une déformation intempestive de la languette 82, tels que par exemple une ou plusieurs nervures 25 parcourant sa face inférieure.

Tel qu'il ressort clairement de ce qui précède, la présente invention permet ainsi d'atteindre les objectifs énoncés dans la partie introductive de la présente description.

Par ailleurs, la variante de réalisation est avantageuse du point de vue de sa mise en oeuvre. Le fait qu'un organe de serrage 8 comporte deux bras 80, 81 symétriques permet son utilisation quelle que soit la configuration du logement 18 et la position de la nervure 19 au niveau de l'une ou de l'autre des extrémités latérales de la découpe 20. Néanmoins, il est tout à fait envisageable de prévoir un organe de serrage ne comportant qu'un seul bras, une telle configuration pouvant, le cas échéant, impliquer l'utilisation d'un nombre plus important d'organes de serrage et être plus appropriée dans certains cas de figure, notamment dans lesquels l'orifice traversant est de petite dimension.

Bien entendu, la présente invention n'est pas limitative du point de vue de la forme et des dimensions de l'orifice traversant 2 et donc du cadre 1, lesquels pourraient également présenter une variété infinie d'autres formes, choisies selon des critères fonctionnels et/ou esthétiques, et être assemblés au moyen d'un ou plusieurs organes de serrage 8 tels que décrits ci-dessus.

## Revendications

1. Cadre (1) muni d'au moins un dispositif pour sa fixation dans un orifice traversant (2) s'étendant entre deux faces opposées (4, 5) d'un panneau (3) tel que notamment un plan de travail (3), ledit cadre (1) étant constitué d'une paroi périphérique (10) présentant un bord supérieur (13) et un bord inférieur (14), ladite paroi périphérique (10) étant apte à revêtir la structure (9) du panneau (3) délimitant ledit orifice traversant (2), et son bord supérieur (13) étant pourvu d'un rebord (15) apte à reposer contre une première face (4) du panneau (3) autour dudit orifice traversant (2), **caractérisé en ce qu'**il comporte au moins un organe de serrage (8) comprenant au moins un bras (80, 81) solidaire d'une languette (82) s'étendant dans un plan perpendiculaire audit bras (80, 81), et un moyen d'assemblage pour fixer ladite languette (82) sur la seconde face (5) du panneau (3) au voisinage de l'orifice traversant (2), ledit bras (80, 81) de l'organe de serrage (8) étant agencé pour exercer d'une part, sur ladite paroi périphérique (10), une force destinée à plaquer ladite paroi périphérique (10) contre la structure (9) du panneau (3) délimitant ledit orifice traversant (2) et d'autre part, sur une butée (19) que comporte ladite paroi périphérique (10), une force destinée à plaquer le rebord (15) dudit cadre (1) contre la première face (4) du panneau (3), lorsque ladite languette (82) est fixée sur la seconde face (5) du panneau (3).

2. Cadre (1) selon la revendication 1, **caractérisé en ce que** la paroi périphérique (10) du cadre (1) est une double paroi comportant une paroi externe (16) et une paroi interne (17), la paroi externe (16) comportant au moins une découpe (20) s'étendant depuis le bord inférieur (14) vers le bord supérieur (13) de la paroi périphérique (10), sur une longueur correspondant sensiblement à la largeur de la languette (82) de l'organe de serrage (8) et une hauteur correspondant sensiblement à l'épaisseur de la languette (82), ladite découpe (20) et l'espace compris entre la paroi externe (16) et la paroi interne (17), au voisinage de ladite découpe (20), définissant un logement (18) pour ledit bras (80, 81) de l'organe de serrage (8).

3. Cadre (1) selon l'une quelconque des revendications 1 ou 2, **caractérisé en ce que** ledit bras (80, 81) comporte une portion sensiblement rectiligne (83) prolongée par une portion en forme de crochet (84).

4. Cadre (1) selon la revendication 3, **caractérisé en ce que** ladite butée est définie par une nervure (19) s'étendant le long de ladite découpe (20) entre la paroi externe (16) et la paroi interne (17) de la paroi périphérique (10), depuis le bord inférieur (14) en direction du bord supérieur (13) de la paroi périphérique (10), la longueur de la nervure (19) correspondant sensiblement à la longueur de la portion sensiblement rectiligne (83) du bras (80, 81) de l'organe de serrage (8).

5. Cadre (1) selon l'une quelconque des revendications 2 à 4, **caractérisé**
**en ce que** l'écart prévu entre lesdites parois interne (17) et externe (16) du cadre (1) est tel qu'il permet un ajustement serré du bras (80, 81) de l'organe de serrage (8) engagé dans ledit logement (18).

6. Cadre (1) selon l'une quelconque des revendications 2 à 5, **caractérisé en ce que** la double paroi est renforcée par une série de nervures (24) reliant entre elles la paroi externe (16) et la paroi interne (17) et s'étendant entre les bords supérieur (13) et inférieur (14) de la paroi périphérique (10).

7. Cadre (1) selon la revendication 6, **caractérisé en ce que** les nervures (24) de la double paroi sont sensiblement équidistantes.

8. Cadre (1) selon l'une quelconque des revendications précédentes, **caractérisé en ce que** ledit organe de serrage (8) comporte deux bras (80, 81), s'étendant dans un même plan perpendiculaire à ladite languette (82), et symétriques par rapport à un axe centré sur un bord (8) de ladite languette (82) dont ils sont solidaires.

9. Cadre (1) selon l'une quelconque des revendications précédentes, **caractérisé en ce que** la seconde face (5) du panneau (3) comporte un renfoncement (22) de forme complémentaire à ladite languette (82) de l'organe de serrage (8) dans lequel ladite languette (82) peut reposer lorsque ledit bras (80, 81) est engagé dans ledit logement (18) et en appui sur ladite butée (19).

10. Cadre (1) selon l'une quelconque des revendications précédentes, **caractérisé en ce que** le moyen d'assemblage permettant de fixer la languette contre la seconde face (5) du panneau (3) est choisi parmi la liste comprenant une vis, un clip à queue, un rivet.

11. Cadre (1) selon la revendication 10, **caractérisé en ce que** ladite languette (82) comporte au moins un trou (26) permettant le passage dudit moyen d'assemblage.

12. Cadre (1) selon l'une quelconque des revendications précédentes, **caractérisé en ce que** la languette (82) comporte des moyens de rigidification.

13. Cadre (1) selon la revendication 12, **caractérisé en ce que** la face inférieure de la languette (82) est parcourue par au moins une nervure (25).

14. Procédé de mise en oeuvre d'un cadre (1) selon l'une quelconque des revendications précédentes, pour la fixation d'un cadre (1) dans un orifice traversant (2) s'étendant entre deux faces opposées (4, 5) d'un panneau (3), tel que notamment un plan de travail dans lequel :
- on insère dans ledit orifice traversant (2) un cadre (1) constitué d'une paroi périphérique (10) présentant un bord supérieur (13) et un bord inférieur (14), ladite paroi périphérique (10) étant apte à revêtir la structure (9) du panneau (3) délimitant ledit orifice traversant (2), et son bord supérieur (13) étant pourvu d'un rebord (15) apte à reposer contre une première face (4) du panneau (3) autour dudit orifice traversant (2), ladite paroi périphérique (10) comportant en outre une butée (19),
- on dispose le rebord (15) du cadre (1) contre une première face (4) du panneau (3) autour dudit orifice traversant (2),
- on place un bras (80, 81) solidaire d'une languette (82) d'un organe de serrage (8) au contact de la paroi périphérique (10) du cadre (1) et de la butée (19) qu'elle comporte,
- on fait pivoter ledit bras (80, 81) autour de ladite butée (19) de manière à amener ladite languette (82) de l'organe de serrage (8) au contact de la seconde face (5) du panneau (3),
- on fixe ladite languette (82) sur ladite seconde face (5) du panneau (3) de manière telle que ledit bras (80, 81) exerce d'une part sur ladite butée (19) une force permettant de plaquer le rebord (15) dudit cadre (1) contre la première face (4) du panneau (3) et d'autre part contre ladite paroi périphérique (10) une force permettant de plaquer ladite paroi périphérique (10) contre la structure (9) du panneau (3) délimitant ledit orifice traversant (2).

15. Procédé selon la revendication 14, **caractérisé en ce que**, pour placer le bras (80, 81) de l'organe de serrage (8) au contact de la paroi périphérique (10) du cadre (1) et de la butée (19) qu'elle comporte, on l'engage dans un logement (18) ménagé entre une paroi externe (16) et une paroi interne (17) de la paroi périphérique (10) du cadre (1).

16. Procédé selon l'une quelconque des revendications 14 ou 15, **caractérisé en ce que** lorsqu'on amène la languette (82) de l'organe de serrage (8) au contact de la seconde face (5) du panneau (3), on la positionne dans un renfoncement (22) de forme complémentaire formé dans ladite seconde face (5) dudit panneau (3).

17. Procédé selon l'une quelconque des revendications 14 à 16, **caractérisé en ce que**, pour fixer la languette (82) de l'organe de serrage (8) sur ladite seconde face (5) du panneau (3) on utilise un moyen d'assemblage choisi parmi la liste comprenant une vis, un clip à queue, un rivet.

## Patentansprüche

1. Rahmen (1), ausgestattet mit mindestens einer Vorrichtung für seine Befestigung in einer Durchgangsöffnung (2), die sich zwischen zwei gegenüber liegenden Seiten (4, 5) einer Platte erstreckt, wie z. B. insbesondere einer Arbeitsfläche (3), wobei der Rahmen (1) aus einer Umfangswand (10) besteht, die einen oberen Rand (13) und einen unteren Rand (14) aufweist, wobei die Umfangswand (10) ausgelegt ist, um die Struktur (9) der Platte (3), die die Durchgangsöffnung (2) begrenzt, zu bedecken, und wobei ihr oberer Rand (13) mit einer Kante (15) versehen ist, die ausgelegt ist, um gegen eine erste Seite (4) der Platte (3) und die Durchgangsöffnung (2) anzuliegen, **dadurch gekennzeichnet, dass** er mindestens ein Organ zum Festspannen (8) umfasst, umfassend mindestens einen Arm (80, 81), der fest mit einer Lasche (82) verbunden ist, die sich in einer senkrechten Ebene zu dem Arm (80, 81) erstreckt, und ein Montagemittel, um die Lasche (82) auf der zweiten Seite (5) der Platte (3) in der Nähe der Durchgangsöffnung (2) zu befestigen, wobei der Arm (80, 81) des Organs zum Festspannen (8) angeordnet ist, um einerseits auf die Umfangswand (10) eine Kraft auszuüben, die dazu vorgesehen ist, die Umfangswand (10) gegen die Struktur (9) der Platte (3) zu drücken, die die Durchgangsöffnung (2) begrenzt, und andererseits auf einem Anschlag (19), der die Umfangswand (10) umfasst, eine Kraft auszuüben, die dazu vorgesehen ist, die Kante (15) des Rahmens (1) gegen die erste Seite (4) der Platte (3) zu drücken, wenn die Lasche (82) auf der zweiten Seite (5) der Platte (3) fixiert ist.

2. Rahmen (1) nach Anspruch 1, **dadurch gekennzeichnet, dass** die Umfangswand (10) des Rahmens (1) eine doppelte Wand ist, umfassend eine externe Wand (16) und eine interne Wand (17), wobei die externe Wand (16) mindestens einen Ausschnitt (20) umfasst, der sich vom unteren Rand (14) zum oberen Rand (13) der Umfangswand (10) auf einer Länge erstreckt, die im Wesentlichen der Länge der Lasche (82) des Organs zum Festspannen (8) entspricht, und eine Höhe, die im Wesentlichen der Dicke der Lasche (82) entspricht, wobei der Ausschnitt (20) und der Raum, enthalten zwischen der externen Wand (16) und der internen Wand (17) in der Nähe des Ausschnitts (20), eine Aufnahme (18) für den Arme (80, 81) des Organs zum Festzuspannen (8) definiert.

3. Rahmen (1) nach einem beliebigen der Ansprüche 1 oder 2, **dadurch gekennzeichnet, dass** der Arm (80, 81) einen im Wesentlichen geradlinigen Abschnitt (83) umfasst, der durch einen Abschnitt in Form eines Hakens (84) verlängert ist.

4. Rahmen (1) nach Anspruch 3, **dadurch gekennzeichnet, dass** der Anschlag durch eine Rippe (19) definiert ist, die sich entlang des Ausschnitts (20) zwischen der externen Wand (16) und der internen Wand (17) der Umfangswand (10) vom unteren Rand (14) in Richtung des oberen Rands (13) der Umgangswand (10) erstreckt, wobei die Länge der Rippe (19) im Wesentlichen der Länge des im Wesentlichen geradlinigen Abschnitts (83) des Arms (80, 81) des Organs zum Festspannen (8) entspricht.

5. Rahmen (1) nach einem beliebigen der Ansprüche 2 bis 4, **dadurch gekennzeichnet, dass** die Abweichung, die zwischen der internen (17) und der externen (16) Wand des Rahmens (1) vorgesehen ist, derart ist, dass sie eine festgespannte Einstellung des Arms (80, 81) des Organs zum Festspannen (8), das in der Aufnahme (18) eingegriffen ist, ermöglicht.

6. Rahmen (1) nach einem beliebigen der Ansprüche 2 bis 5, **dadurch gekennzeichnet, dass** die doppelte Wand durch eine Reihe von Rippen (24) verstärkt ist, die untereinander die externe Wand (16) und die interne Wand (17) verbinden die sich zwischen dem oberen (13) und dem unteren (14) Rand der Umfangswand (10) erstrecken.

7. Rahmen (1) nach Anspruch 6, **dadurch gekennzeichnet, dass** die Rippen (24) der doppelten Wand im Wesentlichen gleich weit entfernt sind.

8. Rahmen (1) nach einem beliebigen der vorhergehenden Ansprüche, **dadurch gekennzeichnet, dass** das Organ zum Festspannen (8) zwei Arme (80, 81) umfasst, die sich auf einer gleichen Ebene senkrecht zur Lasche (82) und symmetrisch mit Bezug auf eine Achse erstrecken, die auf einem Rand (8) der Lasche (82), mit dem sie fest verbunden sind, zentriert ist.

9. Rahmen (1) nach einem beliebigen der vorhergehenden Ansprüche, **dadurch gekennzeichnet, dass** die zweite Seite (5) der Platte (3) eine Verstärkung (22) zusätzlich zu der Lasche (82) des Organs zum Festspannen (8) umfasst, in dem die Lasche (82) ruhen kann, wenn der Arm (80, 81) in der Aufnahme (18) eingegriffen und in Auflage auf dem Anschlag (19) ist.

10. Rahmen (1) nach einem beliebigen der vorhergehenden Ansprüche, **dadurch gekennzeichnet, dass** das Montagemittel, das ermöglicht, die Lasche (82) gegen die zweite Seite (5) der Platte (3) zu fixieren, ausgewählt ist aus der Liste, umfassend eine Schraube, eine Foldback-Klammer, eine Niete.

11. Rahmen (1) nach Anspruch 10, **dadurch gekennzeichnet, dass** die Lasche (82) mindestens ein Loch (26) umfasst, das den Durchgang des Montagemittels ermöglicht.

12. Rahmen (1) nach einem beliebigen der vorhergehenden Ansprüche, **dadurch gekennzeichnet, dass** die Lasche (82) Mittel zur Versteifung umfasst.

13. Rahmen (1) nach Anspruch 12, **dadurch gekennzeichnet, dass** die untere Seite der Lasche (82) von mindestens einer Rippe (25) durchlaufen ist.

14. Verfahren zur Durchführung eines Rahmens (1) nach einem beliebigen der vorhergehenden Ansprüche für die Befestigung eines Rahmens (1) in einer Durchgangsöffnung (2), die sich zwischen zwei gegenüber liegenden Seiten (4, 5) einer Platte (3) erstreckt, wie insbesondere einer Arbeitsfläche, wobei:
- in die Durchgangsöffnung (2) ein Rahmen (1) eingeführt wird, der aus einer Umfangswand (10) besteht, die einen oberen Rand (13) und einen unteren Rand (14) aufweist, wobei die Umfangswand (10) ausgelegt ist, um die Struktur (9) der Platte (3), die die Durchgangsöffnung (2) begrenzt, zu bedecken, und wobei ihr oberer Rand (13) mit einer Kante (15) versehen ist, die ausgelegt ist um gegen eine erste Seite (4) der Platte (3) um die Durchgangsöffnung (2) anzuliegen, wobei die Umfangswand (10) außerdem einen Anschlag (19) umfasst,
- der Rand (15) des Rahmens (1) gegen eine erste Seite (4) der Platte (3) um die Durchgangsöffnung (2) angebracht wird,
- ein Arm (80, 81), fest verbunden mit einer Lasche (82) eines Organs zum Festspannen (8) in Kontakt mit der Umfangswand (10) des Rahmens (1) und des Anschlags (19), den sie umfasst, platziert wird,
- der Arm (80, 81) um den Anschlag (19) schwenken gelassen wird, um die Lasche (82) des Organs zum Festspannen (8) in Kontakt mit der zweiten Seite (5) der Platte (3) zu bringen,
- die Lasche (82) derart auf die zweite Seite (5) der Platte (3) fixiert wird, dass der Arm (80, 81) einerseits auf den Anschlag (19) eine Kraft ausübt, die ermöglicht, die Kante (15) des Rahmens (1) gegen die erste Seite (4) der Platte (3) zu drücken, und andererseits gegen die Umfangswand (10) eine Kraft ausübt, die ermöglicht, die Umfangswand (10) gegen die Struktur (9) der Platte (3), die die Durchgangsöffnung (2) begrenzt, zu drücken.

15. Verfahren nach Anspruch 14, **dadurch gekennzeichnet, dass**, um den Arm (80, 81) des Organs zum Festspannen (8) in Kontakt mit der Umfangswand (10) des Rahmens (1) und dem Anschlag (19), den sie umfasst, zu platzieren, er in einer Aufnahme (18) zum Eingriff gebracht wird, der zwischen einer externen Wand (16) und einer internen Wand (17) der Umfangswand (10) des Rahmens (1) angebracht ist.

16. Verfahren nach einem der Ansprüche 14 oder 15, **dadurch gekennzeichnet, dass**, wenn die Lasche (82) des Organs zum Festspannen (8) in Kontakt mit der zweiten Seite (5) der Platte (3) geführt wird, sie in eine Verstärkung (22) mit komplementärer Form positioniert wird, die in der zweiten Seite (5) der Platte (3) gebildet ist.

17. Verfahren nach einem beliebigen der Ansprüche 14 bis 16, **dadurch gekennzeichnet, dass**, um die Lasche (82) des Organs zum Festspannen (8) auf der zweiten Seite (5) der Platte (3) zu fixieren, ein Montagemittel verwendet wird, ausgewählt aus der Liste, umfassend eine Schraube, eine Foldback-Klammer, eine Niete.

## Claims

1. A frame (1) provided with at least one device for fastening thereof in a through orifice (2) extending between two opposite faces (4, 5) of a panel (3), in particular such as a work surface (3), said frame (1) being made up of a peripheral wall (10) having an upper edge (13) and a lower edge (14), said peripheral wall (10) being able to cover the structure (9) of the panel (3) delimiting said through orifice (2), and its upper edge (13) being provided with a rim (15) able to rest against a first face (4) of the panel (3) around said through orifice (2), **characterized in that** it comprises at least one gripping member (8) including at least one arm (80, 81) secured to a tongue (82) extending in a plane perpendicular to said arm (80, 81), and an assembly means for fixing said tongue (82) on the second face (5) of the panel (3) near the through orifice (2), said arm (80, 81) of the gripping member (8) being arranged to exert on the one hand, on said peripheral wall (10), a force intended to press said peripheral wall (10) against the structure (9) of the panel (3) delimiting said through orifice (2), and on the other hand, on a stop (19) comprised by said peripheral wall (10), a force intended to press the rim (15) of said frame (1) against the first face (4) of the panel (3), when said tongue (82) is fastened on the second face (5) of the panel (3).

2. The frame (1) according to claim 1, **characterized in that** the peripheral wall (10) of the frame (1) is a double wall comprising an outer wall (16) and an inner wall (17), the outer wall (16) comprising at least one cutout (20) extending from the lower edge (14) toward the upper edge (13) of the peripheral wall (10), over a length corresponding substantially to the width of the tongue (82) of the gripping member (8) and a height corresponding substantially to the thickness of the tongue (82), said cutout (20) and the space between the outer wall (16) and the inner wall (17), near said cutout (20), defining a housing (18) for said arm (80, 81) of the gripping member (8).

3. The frame (1) according to any one of claims 1 or 2, **characterized in that** said arm (80, 81) comprises a substantially rectilinear portion (83) extended by a hook-shaped portion (84).

4. The frame (1) according to claim 3, **characterized in that** said stop is defined by a rib (19) extending along said cutout (20) between the outer wall (16) and the inner wall (17) of the peripheral wall (10), from the lower edge (14) toward the upper edge (13) of the peripheral wall (10), the length of the rib (19) substantially corresponding to the length of the substantially rectilinear portion (83) of the arm (80, 81) of the gripping member (8).

5. The frame (1) according to any one of claims 2 to 4, **characterized in that** the gap provided between said inner (17) and outer (16) walls of the frame (1) is such that it allows a tight adjustment of the arms (80, 81) of the gripping member (8) engaged in said housing (18).

6. The frame (1) according to any one of claims 2 to 5, **characterized in that** the double wall is reinforced by a series of ribs (24) connecting the outer wall (16) and the inner wall (17) to one another and extending between the upper (13) and lower (14) edges of the peripheral wall (10).

7. The frame (1) according to claim 6, **characterized in that** the ribs (24) of the double wall are substantially equidistant.

8. The frame (1) according to any one of the preceding claims, **characterized in that** said gripping member (8) comprises two arms (80, 81), extending in a same plane perpendicular to said tongue (82), and symmetrical relative to an axis centered on an edge (8) of said tongue (82) with which they are integral.

9. The frame (1) according to any one of the preceding claims, **characterized in that** the second face (5) of the panel (3) comprises a recess (22) with a shape complementary to said tongue (82) of the gripping member (8) in which said tongue (82) can rest when said arm (80, 81) is engaged in said housing (18) and bearing on said stop (19).

10. The frame (1) according to any one of the preceding claims, **characterized in that** the assembly means making it possible to fasten the tongue against the second face (5) of the panel (3) is chosen from among the list including a screw, a tail clip, a rivet.

11. The frame (1) according to claim 10, **characterized in that** said tongue (82) comprises at least one hole (26) allowing the passage of said assembly means.

12. The frame (1) according to any one of the preceding claims, **characterized in that** the tongue (82) comprises stiffening means.

13. The frame (1) according to claim 12, **characterized in that** the lower face of the tongue (82) is traveled by at least one rib (25).

14. A method for implementing a frame (1) according to any one of the preceding claims, for fastening a frame (1) in a through orifice (2) extending between two opposite faces (4, 5) of a panel (3), in particular a work surface, wherein:
- one inserts, in said through orifice (2), a frame (1) made up of a peripheral wall (10) having an upper edge (13) and a lower edge (14), said peripheral wall (10) being able to cover the structure (9) of the panel (3) delimiting said through orifice (2), and its upper edge (13) being provided with a rim (15) able to rest against a first face (4) of the panel (3) around said through orifice (2), said peripheral wall (10) further comprising a stop (19),
- one positions the rim (15) of the frame (1) against a first face (4) of the panel (3) around said through orifice (2),
- one places an arm (80, 81) integral with a tongue (82) of a gripping member (8) in contact with the peripheral wall (10) of the frame (1) and the stop (19) that it comprises,
- one pivots said arm (80, 81) around said stop (19) so as to bring said tongue (82) of the gripping member (8) into contact with the second face (5) of the panel (3),
- one fastens said tongue (82) on said second face (5) of the panel (3) such that said arm (80, 81) exerts, on the one hand, on said stop (19), a force making it possible to press the rim (15) of said frame (1) against the first face (4) of the panel (3) and on the other hand against said peripheral wall (10), a force making it possible to press said peripheral wall (10) against the structure (9) of the panel (3) delimiting said through orifice (2).

15. The method according to claim 14, **characterized in that**, in order to place the arm (80, 81) of the gripping member (8) in contact with the peripheral wall (10) of the frame (1) and the stop (19) that it comprises, it is engaged in a housing (18) arranged between an outer wall (16) and an inner wall (17) of the peripheral wall (10) of the frame (1).

16. The method according to any one of claims 14 or 15, **characterized in that** when the tongue (82) of the gripping member (8) is brought into contact with the second face (5) of the panel (3), it is positioned in a recess (22) with a complementary shape formed in said second face (5) of said panel (3).

17. The method according to any one of claims 14 to 16, **characterized in that**, to fasten the tongue (82) of the gripping member (8) on said second face (5) of the panel (3), one uses an assembly means chosen from among the list including a screw, a tail clip, a rivet.
